# EUROPEAN PATENT SPECIFICATION

(11) **EP 2 263 351 B1**
(45) Date of publication and mention of the grant of the patent: **05.11.2014**
(21) Application number: 09733020.3
(22) Date of filing: 09.04.2009
(51) Int. Cl.: H04L 12/24, H04L 12/26, H04M 3/30, H04M 11/06

(54) **METHOD AND NODE FOR DECENTRALIZED EMBEDDED SELF-OPTIMIZATION IN A BROADBAND ACCESS NETWORK**
VERFAHREN UND KNOTEN FÜR DEZENTRALISIERTE EINGEBETTETE SELBSTOPTIMIERUNG IN EINEM BREITBANDZUGANGSNETZWERK
PROCÉDÉ ET NOEUD DESTINÉS À UNE AUTO-OPTIMISATION INCORPORÉE ET DÉCENTRALISÉE DANS UN RÉSEAU D'ACCÈS À LARGE BANDE

(30) Priority: 15.04.2008 US 44986 P
(43) Date of publication of application: 22.12.2010
(73) Proprietor: Telefonaktiebolaget LM Ericsson (publ), 164 83 Stockholm (SE)
(72) Inventor: BARRETT, Ronan, Co. Dublin (IE); FARRELL, Paddy, Co. Offaly (IE); FALLON, Liam, Athlone Roscommon (IE)
(74) Representative: Stasiewski, Piotr Grzegorz
(86) International application number: PCT/EP2009/002651
(87) International publication number: WO 2009/127364

(56) References cited:
- EP-A1- 1 780 929
- WO-A2-2007/130879
- US-A1- 2006 221 849
- US-A1- 2007 263 778
- DIXON J ET AL: "Advanced DSL management" IEEE COMMUNICATIONS MAGAZINE, IEEE SERVICE CENTER, PISCATAWAY, US, vol. 41, no. 9, 1 September 2003 (2003-09-01), pages 116-123, XP011100896 ISSN: 0163-6804

## Description

### TECHNICAL FIELD

The present invention is related to optimizing a broadband access network, having a decentralized architecture, with a number of embedded optimizers. (As used herein, references to the "present invention" or "invention" relate to exemplary embodiments and not necessarily to every embodiment encompassed by the appended claims.) More specifically, the present invention is related to optimizing a broadband access network, having a decentralized architecture, with an embedded optimizer that is used to run an optimization loop that monitors lines in communication with it so each line is individually optimized.

### BACKGROUND

This section is intended to introduce the reader to various aspects of the art that may be related to various aspects of the present invention. The following discussion is intended to provide information to facilitate a better understanding of the present invention. Accordingly, it should be understood that statements in the following discussion are to be read in this light, and not as admissions of prior art.

Broadband access network optimization is important to enable delivery of Triple Play (3P) and IPTV solutions over existing network infrastructure. These types of services have high QoS demands, such as high bandwidth, typically 5Mb/s per delivered channel, and high line stability.

Traditionally, broadband access networks are optimized by a high level centralized Domain Manager (DM). The DM aggregates a large amount of measures that help determine the performance of the access network. The measures recorded include Error Seconds (ES), Unavailable Seconds (UAS) and Forward Error Corrections (FEC). The DM can summarise these measures and provide reports which identify problematic lines.

Domain Managers logically group lines together. This logical grouping enables operators to select a configuration profile for a given group of lines from a limited set. Profiles are often used to logically group together a number of line characteristics. Line profiles are often defined to meet the Quality of Service (QoS) requirements of different services. The set of available profiles is limited in order to reduce the amount of storage required for the line configurations and to simplify management tasks in the DM.

Network operators can manually resolve issues on line groupings by altering the line characteristics, such as Signal to Noise Ratio Margin (SNR margin) and the Impulse Noise Protection (INP). A trade off between SNR and INP provides the optimum performance and stability for a line. This trade off is a compromise between the stability and the performance of a line.

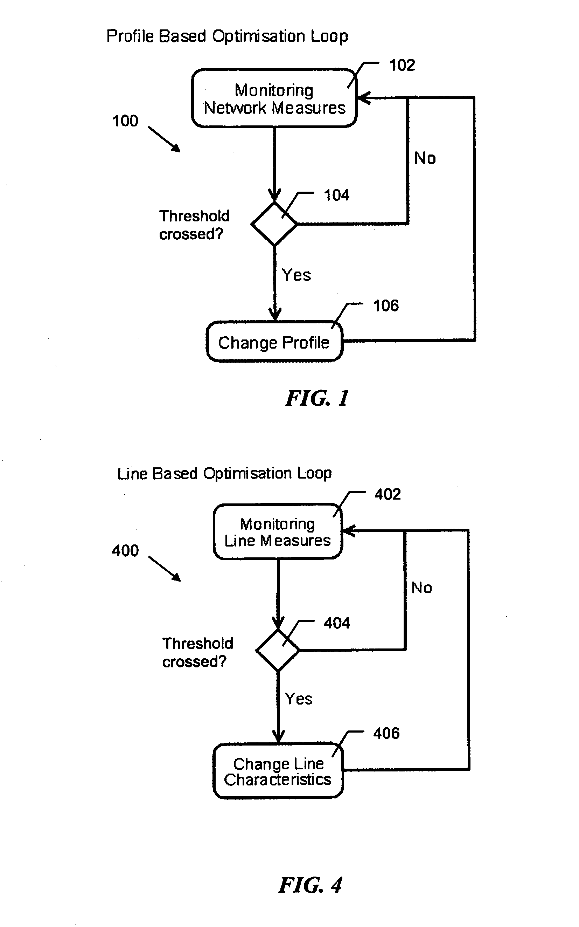

This optimization process can be automated at the DM by running an optimization loop 100 to continually check 102 the access network measures. The DM may then automatically apply 106 various line characteristic values such as SNR and INP, via a profile, if a line grouping has dropped below a given performance threshold 104. Different line profiles are applied until the grouping is stabilised at the optimum performance and stability. Figure 1 illustrates this optimization loop.

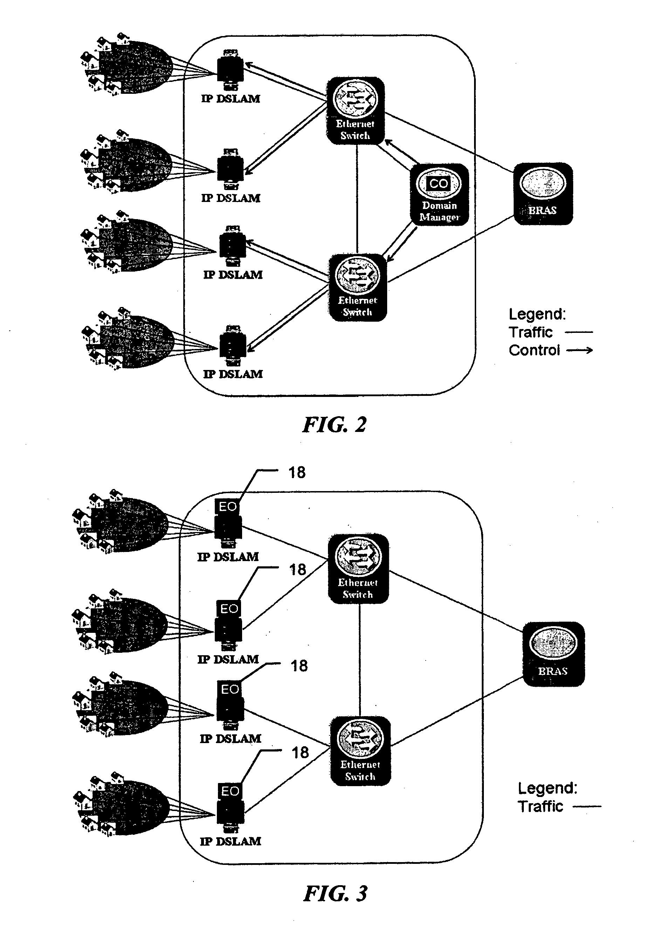

Figure 2 illustrates centralized optimization architecture for broadband access networks where a centralized DM is complimented by a Centralized Optimizer (CO). The CO is located outside the access network and can function in either a manual or automated mode.

Although profiles are being used the result of the optimization cannot always be applied as there may be no existing suitable profile. If a new profile is required to be created for many lines requiring specific optimization this may lead to an explosion on the number of profiles. The management of such a large number of profiles would significantly impact on the scalability of the solution.

There is known a document related to selecting a profile for a DSL line carrying VoIP services, namely US2006/0221849A1. However devices and operations as in the invention now to be described are neither disclosed nor suggested in this document.

WO2007/130879 describes, in response to metric information, a video stream DSL analyzer changing one or more DSL configuration(s) in order to improve performance.

There are a number of limitations to the existing centralized optimization architecture that impacts its ability to meet service agreements such as those imposed by 3P and IPTV, where high bandwidth and line stability are critical.
- Optimization of lines in real-time is very difficult.
- The same "average" profile applied to many lines because of line grouping.
- There are only a limited set of profiles available.
- Significant network bandwidth is required to retrieve line measures.
- Potential centralized processing optimization bottleneck.
- Limited scalability as access network grows in size.
- Line profiles must be manually defined.

### SUMMARY

The present invention pertains to a node in a broadband network having lines. The node comprises a network interface in communication with less than all of the lines. The node comprises an embedded optimizer having a memory and a processing unit in communication with the network interface which runs an optimization loop in the processing unit that monitors the lines in communication with the network interface by measuring error seconds, unavailable seconds and forward error corrections of each line in communication with the network interface so each line in communication with the network interface is individually optimized. When a given line's measure crosses a predefined threshold, the optimization of that line includes adjusting by the processing unit the line's characteristics, signal-to-noise ratio and/or impulse noise protection. Further features of the node are specified in claim 1.

The present invention pertains to a method of using a node in a broadband network having lines. The method comprises the steps of receiving traffic from less than all of the lines at a network interface. There is the step of running by a processing unit of an embedded optimizer an optimization loop that monitors the lines in communication with the network interface by measuring error seconds, unavailable seconds and forward error corrections of each line in communication with the network interface so each line in communication with the network interface is individually optimized. When a given line's measure crosses a predefined threshold, the optimization of that line includes adjusting by the processing unit the line's characteristics, signal-to-noise ratio and/or impulse noise protection. Further features of the method are specified in claim 3.

The present invention pertains to an optimizer device for embedding in a node of a broadband network having communications lines. The node comprises a network interface in communication with less than all of the lines. Said embedded optimizer comprises a memory and a processing unit in communication with the network interface when embedded in the node, which runs an optimization loop in the processing unit that monitors the lines in communication with the network interface by measuring error seconds, unavailable seconds and forward error corrections of each line in communication with the network interface so each line in communication with the network interface is individually optimized. When a given line's measure crosses a predefined threshold, the optimization of that line includes adjusting by the processing unit the line's characteristics, signal-to-noise ratio and/or impulse noise protection. Further features of the device are specified in claim 7.

The present invention pertains to a telecommunications system. The system comprises a broadband access network having lines. The system comprises a plurality of nodes in the network. Each node is in communication with less than all of the lines in the network and having an embedded optimizer which runs an optimization loop that monitors the lines in communication with it by measuring error seconds, unavailable seconds and forward error corrections of each line in communication with the network interface so each line in communication with it is individually optimized. When a given line's measure crosses a predefined threshold, the optimization of that line includes adjusting by the processing unit the line's characteristics, signal-to-noise ratio and/or impulse noise protection. Further features of the system are specified in claim 5.

### BRIEF DESCRIPTION OF THE DRAWINGS

The present invention will be understood and appreciated more fully from the following detailed description taken in conjunction with the drawings in which:
Figure 1 shows a profile based broadband access network optimization loop.
Figure 2 shows a centralized optimization architecture for broadband access networks.
Figure 3 shows a decentralized optimization architecture for broadband access networks in one embodiment of the present invention.
Figure 4 shows a line based broadband access network optimization loop in one embodiment of the present invention.
Figure 5 shows a centralized optimization procedure.
Figure 6 shows a decentralized optimization procedure in one embodiment of the present invention.
Figure 7 is a block diagram of a node of a network in one embodiment of the present invention.

### DETAILED DESCRIPTION

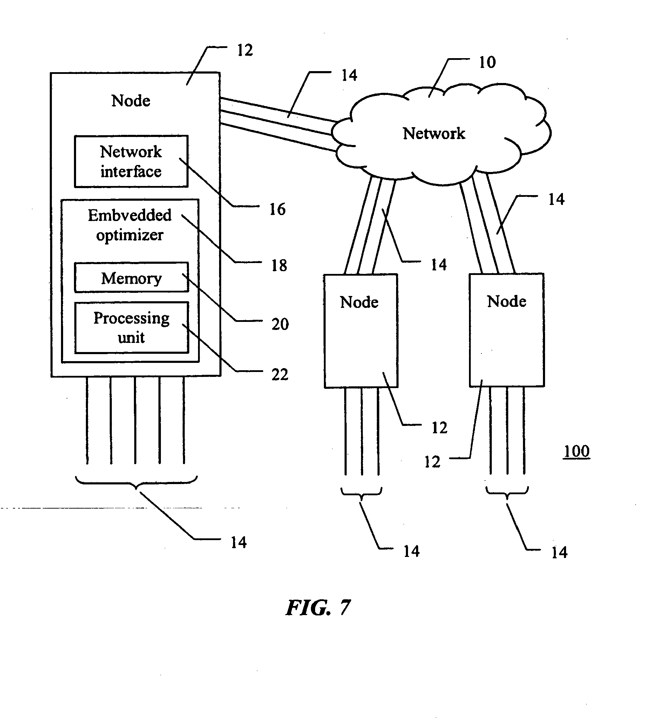

Referring now to the drawings wherein like reference numerals refer to similar or identical parts throughout the several views, and more specifically to figure 7 thereof, there is shown a node 12 in a broadband network 10 having lines 14. The node 12 comprises a network interface 16 in communication with less than all of the lines 14. The node 12 comprises an embedded optimizer 18 having a memory 20 and a processing unit 22 in communication with the network interface 16 which in one embodiment automatically runs an optimization loop 400 in the processing unit 22 that monitors 402 the lines 14 in communication with the network interface 16 so each line in communication with the network interface 16 is individually optimized. The memory 20 is used for storing data used by the processing unit for running the optimization loop and this may include configuration parameters for the lines 14 (line characteristics) as well as temporary data produced during execution of the optimization loop 400. In a preferred embodiment when the optimizer is implemented in hardware and having its own memory and processing unit the benefit is that it will not use the exisitng processing power of the node upon where it resides as this might result in adverse performance of the node.

When a given line's measures cross a predefined threshold 404, the lines 14 characteristics, signal-to-noise ratio and/or impulse noise protection, may be adjusted 406 by the processing unit 22 to achieve a desired possible compromise between stability and performance. The optimization loop may measure error seconds, unavailable seconds and forward error corrections of each line in communication with the network interface 16. The optimization loop may not use line profiles.

The present invention pertains to a method of using a node 12 in a broadband network 10 having lines 14. The method comprises the steps of receiving traffic from less than all of the lines 14 at a network interface 16. There is the step of running by a processing unit 22 of an embedded optimizer 18 an optimization loop that monitors the lines 14 in communication with the network interface 16 so each line in communication with the network interface 16 is individually optimized.

There may be the step of automatically adjusting by the processing unit 22 the line's characteristics, signal-to-noise ratio and/or impulse noise protection, to achieve a desired possible compromise between stability and performance when a given line's measure crosses 404 a predefined threshold. There may be the step of measuring with the optimization loop error seconds, unavailable seconds and forward error corrections of each line in communication with the network interface 16. In a preferred embodiment the optimization loop 400 does not use line profiles.

The present invention pertains to a telecommunications system. The system comprises a broadband access network 10 having lines 14. The system comprises a plurality of nodes 12 in the network 10. Each node 12 is in communication with less than all of the lines 14 in the network 10 and having an embedded optimizer 18 which automatically runs an optimization loop that automatically monitors the lines 14 in communication with it so each line in communication with it is individually optimized.

When the network 10 grows by adding a new node 12 with an embedded optimizer 18 and associated lines 14 to the network 10, optimization of the lines 14 may scale linearly.

In the operation of the invention, an important objective is to address the limitations imposed by existing centralized optimization architectures that optimize a broadband access network 10 from outside the network 10 itself, such as patent WO 2007012867. These limitations significantly restrict the maximum utilisation of existing broadband infrastructure specifically within the "last mile" and make service agreements such as those imposed by 3P and IPTV difficult to meet.

An obvious solution to this problem would be a load balancing architecture, which provides additional computational resources for line management at the Domain Manager level outside the access network 10. However, this solution would result in large increases in the amount of management traffic in the access network 10, impacting scalability. The solution would also impose significant latency issues into the optimization loop as the CO gathers measures and applies new profiles to line groups.

The technique of the present invention replaces the centralized optimization architecture with an embedded decentralized architecture. This approach addresses the limitations outlined above by placing the optimization process in the access network 10 itself by placing an embeded optimizer (EO) 18 at each of the nodes 12, such as IP DSLAMs, in the broadband access network 10. The EO negates the need for a CO outside the broadband access network 10.

This decentralized optimization architecture significantly improves broadband infrastructure utilisation by providing optimization at a fine grained level within the access network 10 itself. This technique may be used on other types of broadband networks 10 outside of the xDSL domain where lines 14 are connected to a local aggregator before they are further aggregated up the network 10 towards the core.

This invention presents a decentralized optimization architecture where optimization of broadband resources takes place in the broadband access network 10. It is assumed an embedded device with sufficient computational resources is available to perform optimization, at for example the IP DSLAM level, in the broadband access network 10. The IP DSLAM is complemented with an embeded optimizer (EO) 18 to provide for decentralized optimization, as illustrated in Figure 3.

This EO 18 runs an optimization loop 400 that constantly monitors 402 the lines 14 connected to the IP DSLAM. As with the centralized solution the optimization process monitors 402 important line measures such as Error Seconds (ES), Unavailable Seconds (UAS) and Forward Error Corrections (FEC). The difference between this optimization loop 400 and the existing art is that all lines 14 are now being individually optimized rather than as line groups. When a given line's measures cross 404 a predefined threshold the lines 14 characteristics, SNR ratio and INP, are automatically adjusted 406 (i.e. with no input from an operator) to achieve a desired possible compromise between stability and performance. This enhanced process is illustrated in Figure 4.

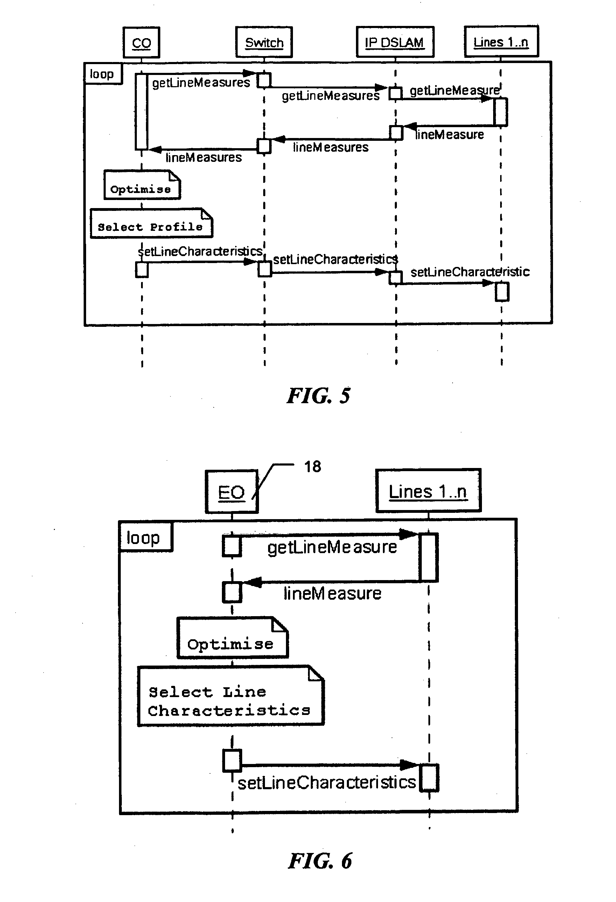

Positioning the optimization loop within the access network 10 at the IP DSLAM level provides considerable advantages over the centralized optimization architecture. Optimization of the broadband lines 14 can now be performed in real-time as the latency imposed by the centralized GET-ANALYSE-DECIDE-SET loop is considerably reduced by positioning the optimization loop closer to the lines 14. The centralized optimization procedure is outlined in Figure 5.

The access network 10 measures are no longer pushed up the network 10 in a batch process for centralized processing, instead they are monitored in real-time, enabling the optimization loop to take action on underperforming lines 14 as and when problems arise. The decentralized optimization procedure is illustrated in Figure 6.

Figure 6 illustrates how the embedded optimizer monitors a line characteristic by performing getLineMeasure/lineMeasure. This lineMeasure is then analyzed using an algorithm within the embedded optimizer and appropriate line characteristics are chosen to ensure the best line performance/stability. These characteristics are then set by performing setLineCharacteristics. For a list and description of some of the many algorithms for optimization that can be used, see WIPO Patent Application WO/2008/003107, titled "METHOD OF OPTIMIZING BIT RATE CAPACITIES OF DSL USER LINES" , and Bell Labs Technical Journal titled "Performance of digital subscriber line spectrum optimization algorithms", Volume 13 , Issue 1 (March 2008) Pages 129-146.

Each line in the access network 10 can now be optimized based on its individual characteristics. Positioning the optimization loop close to the lines 14 enables the fine grained control of the characteristics of each of the lines 14 connected to an IP DSLAM. Traditionally in centralized optimization architectures lines 14 are grouped together and a profile is applied to achieve an average "best" characteristic for a group of lines 14. This process results in "good" lines 14 underperforming to ensure bad lines 14 achieve some level of performance.

No bandwidth is used within the access network 10 to optimize the resources as the optimization process takes place close to the lines 14. In centralized architectures considerable bandwidth must be used to pass network 10 measures up to the centralized optimizer for processing. Depending on the amount of measures taken in the lower parts of the access network 10 and the frequency of the uploading process, the amount of data to be pushed up the network 10 can be significant.

With decentralized optimization there is no significant bottleneck as each embedded optimizer only optimizes the lines 14 directly connected to its associated IP DSLAM. In a centralized architecture a single optimizer must optimize all the lines 14 in the entire access network 10, presenting a potential bottleneck during optimization.

The decentralized optimization architecture is highly scalable as every time a new IP DSLAM and associated lines 14 are added to an access network 10 a new embedded optimizer is also provisioned with the IP DSLAM. This means the optimization process scales linearly as the access network 10 grows. A centralized optimization architecture does not scale linearly in this manner and will need additional resources applied to the centralized optimizer from time to time as the access network 10 grows.

There is no requirement for line profiles in a decentralized optimization architecture. The concept of profiles is used in centralized architectures to apply certain characteristics to a group of lines 14 to achieve "good" performance and stability across all the lines 14 in the group. This means average, un-optimized, characteristics are applied to lines 14. Having the ability to alter the characteristics of lines 14 at a very fine grained level, as is possible in the decentralized optimization architecture, enables the best possible characteristics to be applied to every line in the access network 10.

In some cases, details that define subscription and service related information should also be considered by an embedded optimizer. However, these details are not derived by measuring the line measures. Instead, these details will most likely be pushed to the embedded optimizer at predefined periods.

In a preferred embodiment the embedded optimizer 18 is implemented as a hardware module, however, in an alternative embodiments it may also be implemented as a software module carrying out the optimisation loop in one embodiments of the present invention.

There are a number of advantages to this invention, which address the stated problems with existing solutions outlined above, including;
- Optimization of lines 14 in real-time is possible.
- Each line is individually optimized.
- Network bandwidth usage for the optimization process is reduced as line measures are no longer propagated up to a Domain Manager.
- Optimization distributed throughout access network removing potential optimization bottleneck at Domain Manager.
- Optimization easily scales as access network grows in size.
- No line profiles are required.

### Abbreviations

DM - Domain Manager
3P - Triple Play
IPTV - Internet Protocol Television
DSLAM - Digital Subscriber Line Access Multiplexer
BRAS - Broadband Remote Access Server
CO - Centralized Optimizer
EO - Embedded Optimizer
QoS - Quality of Service
ES - Error Seconds
UAS - Unavailable Seconds
FEC- Forward Error Corrections
INP - Impulse Noise Protection
SNR - Signal to Noise Ratio

Although the invention has been described in detail in the foregoing embodiments for the purpose of illustration, it is to be understood that such detail is solely for that purpose and that variations can be made therein by those skilled in the art without departing from the scope of the invention except as it may be described by the following claims.

## Claims

1. A node (12) for a broadband network having lines (14) comprising:
a network interface (16) in communication with less than all of the lines; and
an embedded optimizer (18) having a memory (20) and a processing unit (22) in communication with the network interface (16) arranged to run an optimization loop to monitor the lines in communication with the network interface (16) by measuring error seconds, unavailable seconds and forward error corrections of each line (14) in communication with the network interface (16) such that each line (14) in communication with the network interface (16) is individually optimized and, when a given line's (14) measure crosses a predefined threshold, the processing unit is arranged to run an optimization of that line including adjusting the line's characteristics, signal-to-noise ratio and/or impulse noise protection,
**characterized in that** the processing unit is arranged to individually optimize each line without using a line profile.

2. The node (12) as described in Claim 1 wherein the optimization loop is adapted to use characteristics of only the line (14) it optimizes.

3. A method of using a node in a broadband network having lines comprising the steps of:
receiving traffic from less than all of the lines (14) at a network interface (16); and
running by a processing unit (22) of an embedded optimizer (18) an optimization loop (400) that monitors the lines (14) in communication with the network interface (16) by measuring error seconds, unavailable seconds and forward error corrections of each line (14) in communication with the network interface (16) so each line (14) in communication with the network interface (16) is individually optimized and when a given line's (14) measure crosses a predefined threshold, the optimization of that line includes adjusting by the processing unit (22) the line's characteristics, signal-to-noise ratio and/or impulse noise protection,
**characterized in that** each line is individually optimized without using a line profile.

4. The method as described in Claim 3 wherein the optimization loop (400) uses characteristics of only the line it optimizes.

5. A telecommunications system (100) comprising:
a broadband access network (10) having lines (14); and
a plurality of nodes (12) in the network, each node in communication with less than all of the lines in the network and having an embedded optimizer (18) arranged to run in a processing unit (22) an optimization loop that monitors the lines in communication with it by measuring error seconds, unavailable seconds and forward error corrections of each line (14) in communication with the network interface (16) such that each line in communication with it is individually optimized, and when a given line's (14) measure crosses a predefined threshold, the embedded optimizer (18) is arranged to run an optimization of that line including adjusting by the processing unit (22) the line's characteristics, signal-to-noise ratio and/or impulse noise protection,
**characterized in that** the optimization loop is arranged to individually optimize each line without using a line profile.

6. The telecommunications system as described in Claim 5 wherein when the network (10) grows by adding a new node (10) the optimization of the new node (12) is carried out by an embedded optimizer (18) comprised in said new node (12).

7. An optimizer device (18) for embedding in a node (12) for a broadband network having lines (14) comprising a network interface (16) in communication with less than all of the lines; wherein said embedded optimizer (18) comprises a memory (20) and a processing unit (22) in communication with the network interface (16) when embedded in said node (12), the processing unit (22) arranged to run an optimization loop that monitors the lines in communication with the network interface (16) by measuring error seconds, unavailable seconds and forward error corrections of each line (14) in communication with the network interface (16) such that each line (14) in communication with the network interface (16) is individually optimized and, when a given line's (14) measure crosses a predefined threshold, the processing unit is arranged to run an optimization of that line including adjusting the line's characteristics, signal-to-noise ratio and/or impulse noise protection,
**characterized in that** the optimization loop is arranged to individually optimize each line without using a line profile.

8. The optimizer device (18) as described in Claim 7 wherein the optimization loop is adapted to use characteristics of only the line (14) it optimizes.

## Patentansprüche

1. Knoten (12) für ein Breitbandnetz mit Leitungen (14), umfassend:
eine Netzschnittstelle (16) in Kommunikation mit weniger als allen der Leitungen; und
einen eingebetteten Optimierer (18) mit einem Speicher (20) und einer Verarbeitungseinheit (22) in Kommunikation mit der Netzschnittstelle (16), die so ausgelegt ist, dass sie eine Optimierungsschleife ausführt, um die Leitungen in Kommunikation mit der Netzschnittstelle (16) durch Messen von Fehlersekunden, unverfügbaren Sekunden und Vorwärtsfehlerkorrekturen jeder Leitung (14) in Kommunikation mit der Netzschnittstelle (16) zu überwachen, derart dass jede Leitung (14) in Kommunikation mit der Netzschnittstelle (16) individuell optimiert wird, und wobei die Verarbeitungseinheit so ausgelegt ist, dass sie, wenn ein Maß einer bestimmten Leitung (14) eine vordefinierte Schwelle überschreitet, eine Optimierung dieser Leitung ausführt, die ein Anpassen der Charakteristiken, des Signal-Rausch-Verhältnisses und/oder des Impulsrauschschutzes der Leitung umfasst,
**dadurch gekennzeichnet, dass** die Verarbeitungseinheit so ausgelegt ist, dass sie jede Leitung ohne Verwenden eines Leitungsprofils individuell optimiert.

2. Knoten (12) nach Anspruch 1, wobei die Optimierungsschleife so ausgelegt ist, dass sie nur Charakteristiken der Leitung (14) verwendet, die sie optimiert.

3. Verfahren zum Verwenden eines Knotens in einem Breitbandnetz mit Leitungen, wobei das Verfahren die folgenden Schritte umfasst:
Empfangen von Verkehr von weniger als allen Leitungen (14) an einer Netzschnittstelle (16); und
Ausführen durch eine Verarbeitungseinheit (22) eines eingebetteten Optimierers (18) einer Optimierungsschleife (400), welche Leitungen (14) in Kommunikation mit der Netzschnittstelle (16) durch Messen von Fehlersekunden, unverfügbaren Sekunden und Vorwärtsfehlerkorrekturen jeder Leitung (14) in Kommunikation mit der Netzschnittstelle (16) überwacht, so dass jede Leitung (14) in Kommunikation mit der Netzschnittstelle (16) individuell optimiert wird, und, wenn ein Maß einer bestimmten Leitung (14) eine vordefinierte Schwelle überschreitet, die Optimierung dieser Leitung ein Anpassen durch die Verarbeitungseinheit (22) der Charakteristiken, des Signal-Rausch-Verhältnisses und/oder des Impulsrauschschutzes der Leitung umfasst,
**dadurch gekennzeichnet, dass** jede Leitung ohne Verwenden eines Leitungsprofils individuell optimiert wird.

4. Verfahren nach Anspruch 3, wobei die Optimierungsschleife (400) nur Charakteristiken der Leitung verwendet, die sie optimiert.

5. Telekommunikationssystem (100), umfassend:
ein Breitband-Zugangsnetz (10) mit Leitungen (14); und
eine Mehrzahl von Knoten (12) im Netz, wobei jeder Knoten mit weniger als allen der Leitungen im Netz in Kommunikation ist und einen eingebetteten Optimierer (18) umfasst, der so ausgelegt ist, dass er in einer Verarbeitungseinheit (22) eine Optimierungsschleife ausführt, welche die Leitungen in Kommunikation mit ihm durch Messen von Fehlersekunden, unverfügbaren Sekunden und Vorwärtsfehlerkorrekturen jeder Leitung (14) in Kommunikation mit der Netzschnittstelle (16) überwacht, derart dass jede Leitung in Kommunikation mit ihr individuell optimiert wird, und der eingebettete Optimierer (18) so ausgelegt ist, dass er, wenn ein Maß einer bestimmten Leitung (14) eine vordefinierte Schwelle überschreitet, eine Optimierung dieser Leistung ausführt, die ein Anpassen durch die Verarbeitungseinheit (22) der Charakteristiken, des Signal-Rausch-Verhältnisses und/oder des Impulsrauschschutzes der Leitung umfasst,
**dadurch gekennzeichnet, dass** die Optimierungsschleife so ausgelegt ist, dass sie jede Leitung ohne Verwenden eines Leitungsprofils individuell optimiert.

6. Telekommunikationssystem nach Anspruch 5, wobei, wenn das Netz (10) durch Hinzufügen eines neuen Knotens (10) wächst, die Optimierung des neuen Knotens (12) durch einen eingebetteten Optimierer (10) ausgeführt wird, der im neuen Knoten (12) enthalten ist.

7. Optimierungsvorrichtung (18) zum Einbetten in einen Knoten (12) für ein Breitbandnetz mit Leitungen (14), umfassend eine Netzschnittstelle (16) in Kommunikation mit weniger als allen der Leitungen; wobei der eingebettete Optimierer (18) einen Speicher (20) und eine Verarbeitungseinheit (22) in Kommunikation mit der Netzschnittstelle (16) umfasst, wenn in den Knoten (12) eingebettet, wobei die Verarbeitungseinheit (22) so ausgelegt ist, dass sie eine Optimierungsschleife ausführt, welche die Leitungen in Kommunikation mit der Netzschnittstelle (16) durch Messen von Fehlersekunden, unverfügbaren Sekunden und Vorwärtsfehlerkorrekturen jeder Leitung (14) in Kommunikation mit der Netzschnittstelle (16) überwacht, derart dass jede Leitung (14) in Kommunikation mit der Netzschnittstelle (16) individuell optimiert wird, und wobei die Verarbeitungseinheit so ausgelegt ist, dass sie, wenn ein Maß einer bestimmten Leitung (14) eine vordefinierte Schwelle überschreitet, eine Optimierung dieser Leitung ausführt, die ein Anpassen der Charakteristiken, des Signal-Rausch-Verhältnisses und/oder des Impulsrauschschutzes der Leitung umfasst,
**dadurch gekennzeichnet, dass** die Optimierungsschleife so ausgelegt ist, dass sie jede Leitung ohne Verwenden eines Leitungsprofils individuell optimiert.

8. Optimierungsvorrichtung (18) nach Anspruch 7, wobei die Optimierungsschleife so ausgelegt ist, dass sie nur Charakteristiken der Leitung (14) verwendet, die sie optimiert.

## Revendications

1. Noeud (12) pour un réseau large bande ayant des lignes (14) comprenant :
une interface de réseau (16) en communication avec moins que la totalité des lignes ; et
un optimiseur incorporé (18) ayant une mémoire (20) et une unité de traitement (22) en communication avec l'interface de réseau (16) agencés pour exécuter une boucle d'optimisation pour surveiller les lignes en communication avec l'interface de réseau (16) en mesurant les secondes d'erreur, les secondes non disponibles et les corrections d'erreurs avant de chaque ligne (14) en communication avec l'interface de réseau (16) de telle sorte que chaque ligne (14) en communication avec l'interface de réseau (16) soit optimisée individuellement et, quand une mesure de ligne donnée (14) dépasse un seuil prédéfini, l'unité de traitement est agencée pour exécuter une optimisation de cette ligne incluant d'ajuster les caractéristiques de ligne, le rapport signal sur bruit et/ou la protection contre le bruit d'impulsion,
**caractérisé en ce que** l'unité de traitement est agencée pour optimiser individuellement chaque ligne sans utiliser un profit de ligne.

2. Noeud (12) selon la revendication 1, dans lequel la boucle d'optimisation est adaptée pour utiliser les caractéristiques de seulement la ligne (14) qu'elle optimise.

3. Procédé d'utilisation d'un noeud dans un réseau large bande ayant des lignes comprenant les étapes consistant à :
recevoir du trafic provenant de moins que la totalité des lignes (14) au niveau d'une interface de réseau (16) ; et
exécuter par une unité de traitement (22) d'un optimiseur incorporé (18) une boucle d'optimisation (400) qui surveille les lignes (14) en communication avec l'interface de réseau (16) en mesurant les secondes erreurs, les secondes non disponibles et les corrections d'erreurs avant de chaque ligne (14) en communication avec l'interface de réseau (16) de sorte que chaque ligne (14) en communication avec l'interface de réseau (16) soit optimisée individuellement et quand une mesure de ligne donnée (14) dépasse un seuil prédéfini, l'optimisation de cette ligne inclut d'ajuster par l'unité de traitement (22) les caractéristiques de ligne, le rapport signal sur bruit et/ou la protection contre le bruit d'impulsion,
**caractérisé en ce que** chaque ligne est optimisée individuellement sans utiliser un profit de ligne.

4. Procédé selon la revendication 3, dans lequel la boucle d'optimisation (400) utilise les caractéristiques de seulement la ligne qu'elle optimise.

5. Système de télécommunications (100) comprenant :
un réseau d'accès large bande (10) ayant des lignes (14) ; et
une pluralité de noeuds (12) dans le réseau, chaque noeud étant en communication avec moins que la totalité des lignes dans le réseau et ayant un optimiseur incorporé (18) agencés pour exécuter dans une unité de traitement (22) une boucle d'optimisation qui surveille les lignes en communication avec lui en mesurant les secondes d'erreur, les secondes non disponibles et les corrections d'erreurs avant de chaque ligne (14) en communication avec l'interface de réseau (16) de sorte que chaque ligne en communication avec elle soit optimisée individuellement, et quand une mesure de ligne donnée (14) dépasse un seuil prédéfini, l'optimiseur incorporé (18) est agencée pour exécuter une optimisation de cette ligne incluant d'ajuster par l'unité de traitement (22) les caractéristiques de ligne, le rapport signal sur bruit et/ou la protection contre le bruit d'impulsion,
**caractérisé en ce que** la boucle d'optimisation est agencée pour optimiser individuellement chaque ligne sans utiliser un profil de ligne.

6. Système de télécommunication selon la revendication 5, dans lequel quand le réseau (10) s'agrandit en ajoutant un nouveau noeud (10) l'optimisation du nouveau noeud (12) est effectuée par un optimiseur incorporé (18) compris dans ledit nouveau noeud (12).

7. Dispositifs optimisateur (18) à incorporer dans un noeud (12) pour un réseau large bande ayant des lignes (14) comprenant une interface de réseau (16) en communication avec moins que la totalité des lignes ; dans lequel le dit optimiseur incorporé (18) comprend une mémoire (20) et une unité de traitement (22) en communication avec l'interface de réseau (16) quand incorporé dans le dit noeud (12), l'unité de traitement (22) étant agencé pour exécuter une boucle d'optimisation qui surveille les lignes en communication avec l'interface de réseau (16) en mesurant les secondes d'erreurs, les secondes disponibles et les corrections d'erreurs avant de chaque ligne (14) en communication avec l'interface de réseau (16) de sorte que chaque ligne (14) en communication avec l'interface de réseau (16) soit optimisée individuellement et, quand une mesure de ligne donnée (14) dépasse un seuil prédéfini, l'unité de traitement est agencée pour exécuter une optimisation de cette ligne incluant d'ajuster les caractéristiques de ligne, le rapport signal sur bruit et/ou la protection contre le bruit d'impulsion,
**caractérisée en ce que** la boucle d'optimisation est agencée pour optimiser individuellement chaque ligne sans utiliser un profil de ligne.

8. Dispositifs optimiseur (18) selon la revendication 7, dans lequel la boucle d'optimisation est adaptée pour utiliser les caractéristiques de seulement la ligne (14) qu'elle optimise.
